# EUROPEAN PATENT APPLICATION

(11) **EP 4 568 181 A1**
(43) Date of publication of application: **11.06.2025**
(21) Application number: 24208606.4
(22) Date of filing: 24.10.2024
(51) Int. Cl.: H04L 9/40, G06F 21/44, H04L 9/32

(54) **METHOD, APPARATUS AND COMPUTER PROGRAM FOR PROVISIONING SECURITY MECHANISM**

(30) Priority: 05.12.2023 GB 202318539
(71) Applicant: Nokia Technologies Oy, 02610 Espoo (FI)
(72) Inventor: XU, Minyin Talia, Cambridge (GB); THANGARAJAN, Ashok Samraj, Cambridge (GB); MONTANARI, Alessandro, Cambridge (GB)
(74) Representative: Nokia EPO representatives

(57) **Abstract**

There is provided a method, computer program, and apparatus for causing an apparatus comprising a display layer and an under-display camera to perform: causing at least one image to be output by the display layer; using the under-display camera to determine an interference pattern resulting from the at least one image being output; converting the determined pattern into a first hash; and signalling the first hash to a requesting entity for verifying the apparatus.

## Description

### FIELD

The present application relates to an apparatus, method and computer program. In particular, but not exclusively, the present application relates to a use of an under-display camera to assist in the provision of a security mechanism.

### BACKGROUND

A communication system can be seen as a facility that enables communication sessions between two or more entities such as terminals (e.g., user equipment (UE)), base stations, and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

A terminal may be provided with a service across the communication system from a service provider. A wide variety of security mechanisms have been developed in order to engender confidence that the service provided by the service provider is being provided to an authorised user.

### SUMMARY

According to a first aspect, there is provided an apparatus comprising a display layer and an under-display camera, the apparatus comprising: means for causing at least one image to be output by the display layer; means for using the under-display camera to determine an interference pattern resulting from the at least one image being output; means for converting the determined pattern into a first hash; and means for signalling the first hash to a requesting entity for verifying the apparatus.

According to a second aspect, there is provided a method for an apparatus comprising a display layer and an under-display camera, the method comprising: causing at least one image to be output by the display layer; using the under-display camera to determine an interference pattern resulting from the at least one image being output; converting the determined pattern into a first hash; and signalling the first hash to a requesting entity for verifying the apparatus.

According to a third aspect, there is provided an apparatus comprising a display layer; an under-display camera; at least one processor; and at least one memory comprising computer code that, when executed by the at least one processor, causes the apparatus to perform at least the following: causing at least one image to be output by the display layer; using the under-display camera to determine an interference pattern resulting from the at least one image being output; converting the determined pattern into a first hash; and signalling the first hash to a requesting entity for verifying the apparatus.

According to a fourth aspect, there is provided a computer readable medium comprising instructions which, when executed by an apparatus comprising a display layer and an under-display camera, cause the apparatus to perform at least the following: causing at least one image to be output by the display layer; using the under-display camera to determine an interference pattern resulting from the at least one image being output; converting the determined pattern into a first hash; and signalling the first hash to a requesting entity for verifying the apparatus.

According to a fifth aspect, there is provided a non-transitory computer readable medium comprising program instructions that, when executed by an apparatus, cause the apparatus to perform at least the method according to any of the preceding aspects.

The following features may further apply in respect of all of the above aspects.

The causing the at least one image to be output may further comprise: receiving, from the requesting entity, an indication of the at least one image; and using the indication to identify the at least one image to be output from a plurality of images.

When the at least one image comprises more than one image, the causing the at least one image to be output may further comprise: receiving, from the requesting entity, an indication of an order in which the more than one image are to be output; and causing the more than one image to be output in the indicated order.

The using the under-display camera to determine the interference pattern resulting from the at least one image being output may further comprise: causing, the under-display camera to capture at least a portion of a plurality of the more than one image; and determining the interference pattern using said captured images.

When the at least one image comprises a single image, the causing the at least one image to be output may further comprise: r receiving, from the requesting entity, an indication of an order of a plurality of different regions of the single image in which the single image is to be output; and causing the different regions of the single image to be output in the indicated order.

The causing the at least one image to be output may further comprise: selecting, by the apparatus either autonomously or via user input, the at least one image; and signalling an indication of the at least one image to the requesting entity.

When the at least one image comprises more than one image, the causing the at least one image to be output may further comprise: selecting, by the apparatus either autonomously or via user input, an order in which the more than one image are to be output; and causing the more than one image to be output in the indicated order; and the apparatus may further perform signalling an indication of the order to the requesting entity.

The using the under- display camera to determine the interference pattern resulting from the at least one image being output may further comprise: causing, the under-display camera to capture at least a portion of a plurality of the more than one image; and determining the light-based interference pattern using said photographs captured images.

When the at least one image comprises a single image, the causing the at least one image to be output may further comprise: selecting, by the apparatus either autonomously or via user input, an order of a plurality of different regions of the single image in which the single image is to be output; and causing the different regions of the single image to be output in the indicated order, and the apparatus may further perform signalling an indication of the order to the requesting entity.

The apparatus may, for any image of the at least one image output: determine a respective temperature of the display screen while the image is being output; and signal, to the requesting entity, an indication of a mapping that maps the respective temperatures to their respective image of the at least one image.

The above mentioned aspects may be performed as part of a registration procedure for re-registering a user of the apparatus, the apparatus, or the user of the apparatus and the apparatus with a service provider.

Subsequent to said signalling the first hash to the requesting entity for verifying the apparatus, the user, or the user of the apparatus and the apparatus, the apparatus may perform: requesting to receive a service from the service provider; receiving, from the requesting entity, a request for a hash for verifying the apparatus;;, causing the at least one image to be re-output; using the under-display camera to determine the light-based interference pattern resulting from the at least one image being re-output; converting the determined pattern into a second hash; and signalling the second hash to the requesting entity for verifying the apparatus to the service provider.

The apparatus may be caused to compare the first hash to the second hash, wherein the comparing the first hash and the second hash further comprises: calculating a distance between the first hash and the second hash; and determining the first hash and second hash are at least substantially matching when the distance is less than or equal to a predetermined distance threshold or error threshold. The distance may comprise one or more from the group of: a hamming distance between the first and second hash; a Euclidean distance between the first and second hash; or any other distance metric between the first and the second hash used by a hashing algorithm that generates the first and the second hash .

The first hash and the second hash may be generated using a hashing algorithm based on one or more hashing algorithms from the group of: an Average Hashing, aHash, algorithm; a Median Hashing, mHash, algorithm; a Perceptual Hashing, pHash, algorithm; a Difference Hashing, hash, algorithm; a Block Hashing, bHash, algorithm; a Wavelet Hashing, wHash, algorithm; a ColorMoment Hashing algorithm; a Color Hashing, Colorhas, algorithm, a Marr-Hildreth, marrhildreth, hashing algorithm; a fuzzy hashing algorithm; a video hashing algorithm; a locality-sensitive hashing algorithm; a machine learning hashing algorithm; a pair of machine learning hashing models; or any other hashing algorithm configured for generating a hash from one or more images. The hashing algorithm used for generating the first hash and the second hash may be the same hashing algorithm; or the hashing algorithm used for generating the first hash and the second hash may be similar or different hashing algorithms that generate the same hash.

The at least one image may comprise video data.

In the above, many different embodiments have been described. It should be appreciated that further embodiments may be provided by the combination of any two or more of the embodiments described above.

### DESCRIPTION OF FIGURES

Various example embodiments will now be described, by way of example only, with reference to the accompanying Figures in which:
FIG. 1A and 1B show a representation of an apparatus according to some example embodiments;
FIG. 2A illustrates example layers of a display of a terminal;
FIG 2B illustrates example light reflection from the layers of FIG. 2A when the light originates from a pixel layer;
FIG. 3 illustrates example signalling between entities described herein;
FIG. 4 illustrates a rolling shutter stock; and
FIG. 5 illustrates example operations that may be performed by apparatus described herein.

### DETAILED DESCRIPTION

The present disclosure relates to under-display cameras.

In particular, the following relates to the use of under-display cameras for providing a security mechanism for verifying a terminal (e.g., a user device). The verification may be performed as part of determining whether a service that is provided by a service provider is being provided to an authorised (e.g., registered) user and/or terminal.

In particular, the following discloses a method to take advantage of light leakage interference experienced by under-display cameras when pixels located above the under-display camera are outputting, for example, displaying, presenting or rendering, an image. Stated differently, the following relates to exploiting inherent defects how light is imaged, e.g., one or more digital images are taken, by an under-display camera as a result of its location under pixels of a pixel display layer of the terminal in order to provide a unique pattern that may be used as an identifier of the terminal).

In more detail, under the following described mechanism method, rather than treating the light leakage interference from pixels in the pixel layer of a display as an inherent disadvantage of under-display cameras, the light leakage interference is instead treated as a unique characteristic of separate under-display camera. Stated differently, each the separate under-display camera, due to the specifics of light leakage interference, generates a unique signature (a.k.a. a "fingerprint"). The following describes that this unique signature may be extracted and later used for user authentication.

Stated differently, the distinct signature generated by light interference in the light imaged by an under-display camera can enhance user authentication processes. The presently described method capitalizes on the fact that these hardware-based interference patterns of the pixel layer are unique to a display, i.e. to a user device (e.g., a terminal) that has the display, and cannot be easily duplicated. Their usage may therefore be used to introduce a layer of security for verifying a user and/or user device.

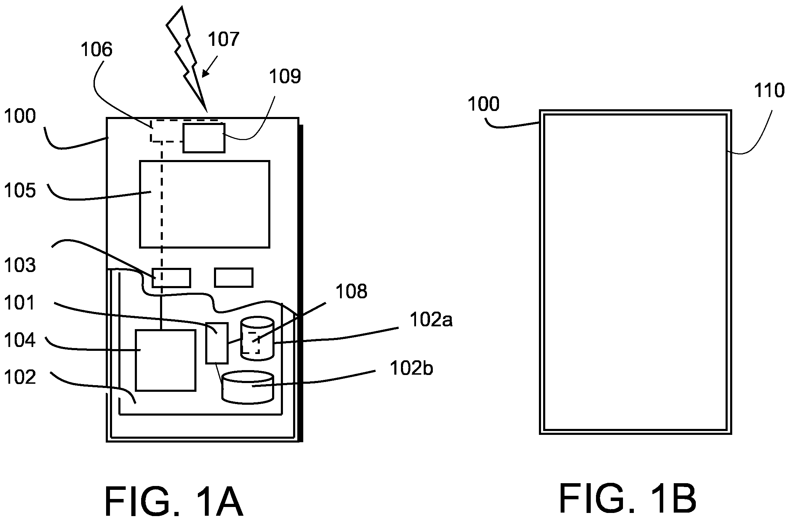

In the following certain embodiments are explained with reference to terminals. Before explaining in detail the exemplifying embodiments, certain general principles of a wireless communication system, access systems thereof, and mobile communication devices are briefly explained with reference to FIG. 1A and 1B, which show features of a same device.

FIG. 1A and 1B illustrate an example of a terminal 100. The terminal 100 may be provided by any device capable of sending and receiving signals (e.g., using wireless signalling and/or wired signalling). Non-limiting examples comprise a user equipment, a mobile station (MS) or mobile device such as a mobile phone or what is known as a 'smart phone', a computer such as a laptop computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device, a television, a vehicle display (e.g., infotainment displays and/or dashboard displays), or any combinations of these or the like. The terminal 100 may provide, for example, communication of data for carrying communications. The communications may be one or more of voice, electronic mail (email), text message, multimedia, data, machine data and so on.

The terminal 100 may receive signals over an air or radio interface 107 (and/or via a wired interface (not shown)) via appropriate apparatus for receiving signals and may transmit signals via analogously appropriate apparatus for transmitting signals. In FIG. 1, transceiver apparatus is designated schematically by block 106. The transceiver apparatus 106 may be provided, for example, by means of a radio part and associated antenna arrangement. The antenna arrangement may be arranged internally or externally to the mobile device.

The terminal 100 may be provided with at least one processor 101, at least one memory ROM 102a, at least one RAM 102b and other possible components 103 for use in software and hardware aided execution of tasks it is designed to perform, comprising control of access to and communications with access systems and other communication devices. The at least one processor 101 is coupled to the RAM 102b and the ROM 102a. The at least one processor 101 may be configured to execute an appropriate software code 108. The software code 108 may for example allow to perform one or more of the present aspects. The software code 108 may be stored in the ROM 102a.

The processor, storage and other relevant control apparatus can be provided on an appropriate circuit board and/or in chipsets. This feature is denoted by reference 104.

One example of external appearance of the terminal 100 is illustrated in FIG. 1B. The terminal may optionally have a user interface 302 such as a key pad 105 (which may be implemented via a touch sensitive screen or pad, or via hardware-based keys), a touch sensitive screen or a pad, or a microphone, or any combinations thereof or the like. One or more of a display 110, a speaker and the microphone may be provided depending on the type of the device. It is understood that although the display 110 of the terminal 100 of FIG. 1B is shown as taking up an entire surface of the terminal, this may not be the case for all terminals.

Terminals such as those described in relation to FIG. 1 comprise a camera 109 on the display side (e.g., on the side of the terminal that faces the user when the user is viewing an output display of the terminal). This camera on the display side is often called a front facing camera. This camera on the display is often used for taking images of the user.

Recent generations of front-facing terminal cameras have been designed to be positioned beneath a terminal's display screen. This under-display arrangement enables these cameras to capture images whilst remaining entirely concealed beneath the screen, which assists in maintaining a seamless visual continuity.

In such an under-screen arrangement (also referred to as under-display arrangements), the camera is configured to obtain an image to be captured (e.g., stored) using light transmitted to the camera between pixels of the display. In order to allow the light to be transmitted through the display pixels to the camera, the region of the display screen in the immediate vicinity of the camera may have a lower pixel density than regions of the display screen further away from the camera.

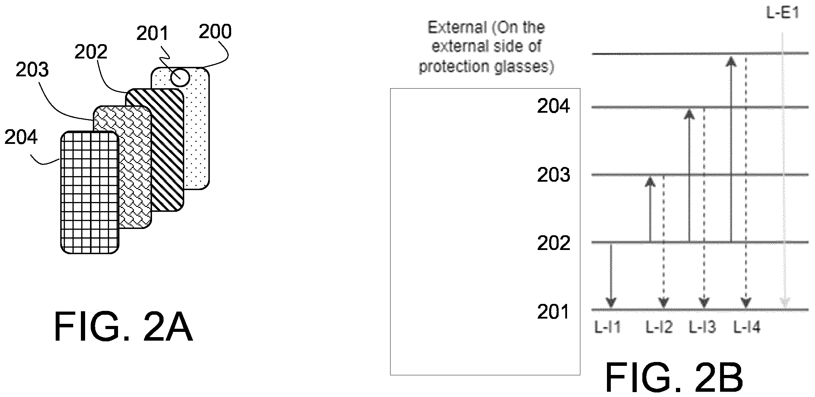

**As** the under-display cameras are underneath display pixels, light may leak from the display pixels towards the camera. Stated differently, when a bright image is displayed on the screen, there is a considerable influx of light leakage into the under-display camera, which may cause notable interference. This means that under-display cameras inevitably experience interference pattern due to light leakage from the screen. This is illustrated with respect to FIG. 2A and 2B.

FIG. 2A illustrates a selection of layers that may be comprised in a display screen of a terminal.

FIG. 2A illustrates a terminal 200 comprising a camera 201. A pixel layer 202 (e.g., comprising organic light emitting diode (OLED) pixels) is located above the camera 201. It is understood that OLEDs are mentioned here as an example light source, and that other types of pixels and/or light sources may be used in place of OLEDs. For example, light emitting diodes (LEDs), liquid crystals, and/or quantum LEDs (QLEDs) are examples of other types of light sources that may be comprised in a pixel layer described herein. A cathode layer 203 is located above the pixel layer 202. A protection layer 204 (comprising, e.g., a glass layer) is located above the cathode layer.

FIG. 2B illustrates which of the layers of FIG. 2A may contribute to the interference pattern produced on the camera 201 when the pixel layer 202 is outputting a display image.

One or more sources of light may assist in potentially contributing to the interference pattern. In the example of FIG. 2B, at least five sources of light that may assist in potentially contributing to the interference pattern are considered. These are discussed below in terms of the strongest contributor to the weakest contributor.

**The** strongest contributor to the interference pattern is labelled as L-11 and corresponds to direct light leakage from the pixel layer 202. Stated differently, L-11 corresponds to light that leaks backward from an OLED light array directly to the camera due to the light's emission pattern.

**The** next strongest contributor to the interference pattern is labelled as L-I2 and corresponds to light from the pixel layer 202 being reflected back to the camera from the cathode layer 203. Stated differently, L-I2 corresponds to the light reflected from the cathode layer that then reaches the camera.

**The** next strongest contributor to the interference pattern is labelled as L-I3 and corresponds to light from the pixel layer 202 being reflected back to the camera from the protection layer 204. Stated differently, L-I3 corresponds to light that gets reflected from the inner surface of the protection glass and then reaches the camera.

**The** next strongest contributor to the interference pattern is labelled as L-I4 and corresponds to light from the pixel layer 202 being reflected back to the camera from any other layer above the protection layer (e.g., when a plastic protector is placed over the protection layer and/or dirt and/or grease accumulates over the protection layer). Stated differently, L-I4 corresponds to light that is reflected from the outer surface of the protection glass. Such reflection occurs when light hits particles such as fingerprints or other objects on the screen, and is then reflected back to the camera.

Everyday wear-and-tear factors such as accumulated dirt, fingerprints, and minor scratches predominantly impact the outer glass reflection (L-14). However, the influence of these elements is minimized due to the considerable distance the light has travelled and the significant attenuation it has experienced. The diffuse nature of the particles such as dirt and fingerprints further reduces their impact.

The final contributor to the interference pattern is labelled as L-E1 and corresponds to light from outside the display entering display layers (e.g., light that does not originally originate from the pixel layer 202). Stated differently, L-E1 corresponds to the external light (for image capture).

To address this, terminal's camera is often located in a notification bar displayed on the terminal's display screen, and/or the light output by the pixels is deactivated for taking or capturing one or more photos or images with the under-display camera.

The present application recognises that the light interference generated by a displayed image on an under-display camera is unique and may be used to derive a unique hash for a camera that is terminal-specific. Stated differently, the light interference pattern generated on light imaged by an under-display camera by displaying an image using the overhanging pixel layer of the terminal can create a distinctive 'fingerprint' that can be harnessed for the purpose of user authentication. The light interference generated may be unique as a result of, for example, the uniqueness of the display and/or the uniqueness of the camera lens. Therefore, the unique hash may be said to be camera-specific and/or display-specific.

This will be illustrated in more detail below. In particular, the following illustrates operations for generating at least one hash value that corresponds to the interference pattern produced on light received on the under-display camera by outputting at least one image on the display. The image may comprise a representation of an object (e.g., a physical object, a virtual object, a barcode, a QR code, etc.). The image may comprise a homogenous colour output. The image may comprise a graduated colour output. The following further illustrates operations for using the generated at least one hash value for a later verification operation.

It is understood that although the following considers the operations for generating at least one hash value that corresponds to the interference pattern produced on light received by the under-display camera by outputting, for example, by displaying, presenting or rendering, at least one image on the display, the presently described techniques are not limited to those interference patterns being generated in this way. In particular, the interference pattern may instead be generated by illuminating the display. For example, some terminals that comprise a front-facing camera (e.g., an under-display camera) do not comprise a flash lighting source for that front facing camera. In this case, an object to be imaged by the under-display camera may instead be illuminated using a "white screen", which is an output of the display that corresponds to the pixel layer outputting only white light. The output white light may illuminate the object. In such a case, the "image" may comprise a wholly white light output. It is understood that, in addition to white light and images comprising at least one object, other homogenous outputs (and/or pixel gradients) may be used as the at least one image output by the display. In particular, any light-based output of the pixel display layer may be used as the at least one image mentioned herein.

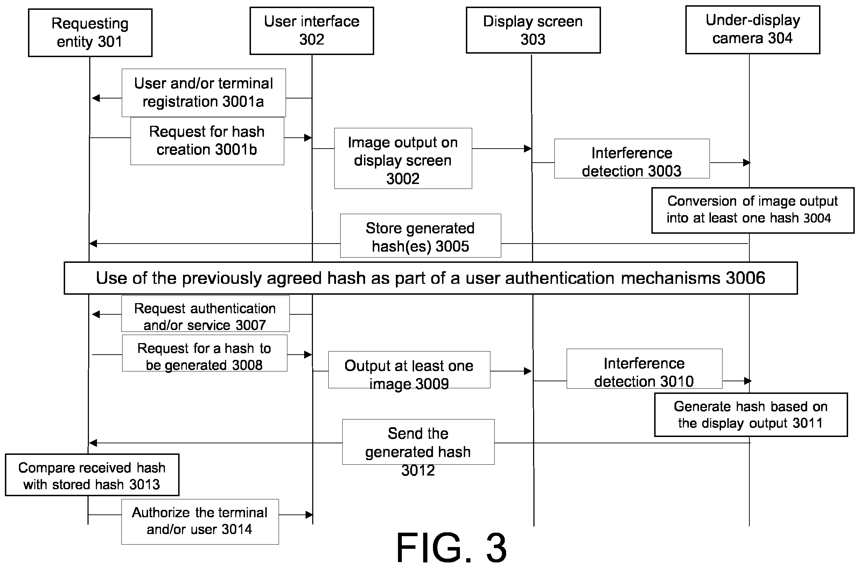

These are illustrated with reference to FIG. 3 to 5.

FIG. 3 illustrates operations that may be performed between a requesting entity 301, a user interface 302, a display screen 303, and an under-screen camera 304. All of these entities may be located on a terminal 100, although it is understood that the requesting entity 301 may be located remote from the terminal.

3001a to 3005 relate to has generation causing a verifying entity (referred to below as a "requesting entity") and a terminal comprising the under-display camera to agree on at least one hash that may be used for later verification mechanisms. 3006 to 3013 relate to the use of the previously agreed at least hash of 3001a to 3005 as part of a later verification mechanisms. For example, 3001 to 3005 may be performed as part of an initial registration procedure when a terminal registers with a service provider (e.g., service producer), while 3006 to 3013 may be performed as part of the service provider determining whether the terminal is verified for receiving a requested service from the service provider. For example, 3001a to 3005 may be performed when a terminal first links a banking application on the terminal to a server serving the banking application, while 3006 to 3007 may be performed whenever the terminal later opens the banking application for viewing banking information via the banking application.

It is understood that although the operations of 3001a to 3005 are described below with reference to a registration operation, that these operations may be performed at any time, and may be used for updating the value of previously stored hash values obtained during previous iterations of 3001a to 3005.

Further, it is understood that the hash generation of 3002 to 3004 and the hash generation of 3009 to 3011 may be performed in the same way by the terminal. Consequently, the below disclosure in respect of 3002 to 3004 may also apply in respect of 3009 to 3011.

3001a and 3001b illustrate the initiation of a registration procedure. In particular, 3001a and 3001b illustrate an example trigger event that causes a hash generation operation of 3002 to 3004 to be performed. This trigger event may be, for example, a user registration and/or a user device registration with a service producer. For example, the trigger event may be a user input initiating a registration with a service producer (e.g., a banking application). The trigger event may comprise the expiry of a timer (e.g., for periodically and/or aperiodically updating currently stored hash value(s)). It is understood that the service producer may comprise the requesting entity 301. The service producer may comprise any application that is configured to verify a user device as part of its operations (e.g., a banking application, a shopping application, etc.). It is understood that other signalling than that described below in relation to 3001a to 3001b may provide the example trigger event to be caused. The signalling that causes the trigger event to be caused may be defined by the service producer.

During 3001a, the user input on the user interface 302 causes the requesting entity 301 to be signalled. This signalling may comprise a request to register the user and/or terminal with an application (e.g., the application that is configured to provide a service to terminals, as described further herein)

During 3001b, the requesting entity 301 signals the terminal (represented in FIG. 3 by the user interface 302). This signalling may comprise a request for an authentication token. This authentication token may comprise, or otherwise be based on, the hash described herein. Optionally, this signalling may comprise an indication of at least one image to be output during 3002. It is understood that this indication of the at least one image may not be provided in examples in which the terminal is configured to select the at least one image of 3002.

During 3002, the user interface 302, with or without a related user input, causes at least one image to be output, for example, to be displayed, presented or rendered, by the display screen 303. The display screen may correspond to the display screen of FIG. 2. Therefore, the user interface 302 may cause at least one image to be output by the pixel layer 202 of the display screen.

The at least one image to be output by the pixel layer 202 may be selected by the user input.

Alternatively or additionally, the at least one image to be output by the pixel layer 202 may be selected by the requesting entity 301. In this case, the requesting entity may signal the at least one image to the user interface 302 and/or signal at least one index value that may be used by the terminal for identifying the at least one image (e.g., where the at least one image is already stored on the terminal, and/or where the at least one image is able to be downloaded by the terminal).

The at least one image may comprise a single image.

Alternatively or additionally, the at least one image may comprise a plurality of images. The plurality of images may be caused to be displayed in a preconfigured order. Stated differently, the plurality of images may be caused to be displayed in a specific sequence. The preconfigured order may be known by both the requesting entity and the terminal that comprises the under-display camera 304.

**As** an extension to this, outputting the plurality of images may cause a video to be output by the display screen.

Causing a plurality of images to be output may cause an interference pattern to be generated in a similar way to a rolling shutter effect.

**The** rolling shutter effect is a method of image capture in which a still picture, or frames of a video, is recorded not from a snapshot of a single point in time, but rather by scanning across the frame either vertically or horizontally across a plurality of instances of time. In other words, not all parts of the image are recorded at a same time, even though the frame (e.g., the whole composite image determined from this scanning operation) is displayed at the same time during playback. This is performed line by line, with different parts of the image sensor capturing the view at slightly different times.

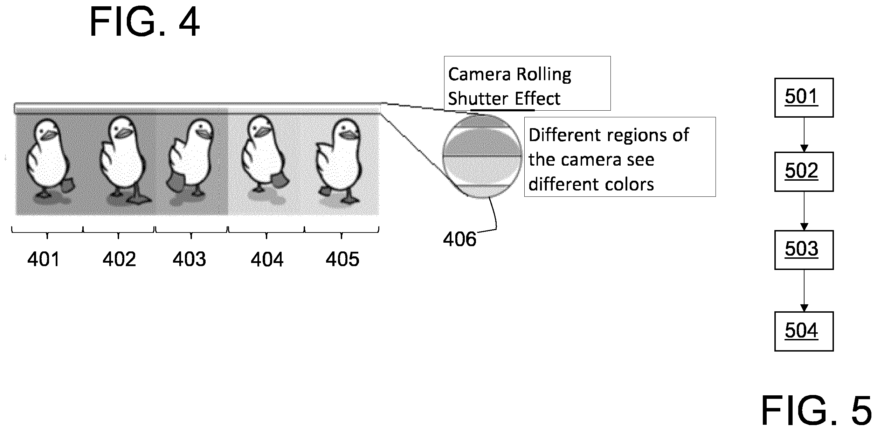

This is illustrated with respect to FIG. 4.

FIG. 4 illustrates a plurality of images 401-405 that correspond to a sequence of images that, when played out in sequence, appears to display a duck walking. The backgrounds of images 401-405 may be associated with different colours. 406 illustrates different regions of the camera observing different background colours at different times. For example, 406 illustrates a first part of an image captured at a first camera region during 402 at a first time, a second part of an image captured at a second camera region during 403 at a second time, a third part of an image captured at a third camera region during 404 at a third time, and a fourth part of an image captured at a fourth camera region during 405 at a fourth time. The first to fourth parts may be combined to create a "total" image for the camera that is used during 304 for generating at least one hash value.

**The** number of the different regions may be related to the number of the images that are output, for example, displayed, presented or rendered. The number of the different regions may be selected by a service remote from the terminal (e.g., the requesting entity, or an application server that is using the requesting entity to perform the presently described hash generation). The number of the different regions may be selected via receipt of a user input. The number of the different regions may be selected by an application resident on the terminal. In any of these cases, the number of regions can be any number more than 1.

A similar mechanism to this rolling shutter effect may be applied when only a single image is caused to be displayed on the display screen. In this case, different regions of the single image may be caused to be output by the display screen, and the camera may capture the interference pattern from these different regions at the different times, and combine the result of the different regions to form a "total" image, as described in the preceding paragraph.

In the context of an under-display camera, the rolling shutter effect can be used in combination with light leakage from the screen to generate a unique pattern on the camera. For example, a specific video or image sequence that, when played on the display screen, causes a unique pattern of light leakage from light being emitted from the pixel layer due to the rolling shutter effect.

During 3003, the under-display camera is caused to image the output of 3002, i.e. to capture the one or more displayed images, and the terminal comprising the under-display camera is caused to detect interference in the imaged output, i.e. the captured the one or more displayed images, that results from the light leakage from the pixel layer.

During 3004, the device 100 converts the imaged output, i.e. the captured the one or more displayed images, into at least one hash. A hash is a fixed-length string of characters that is derived from some data, e.g. from image or video data, using a hash function. A hash function is a one-way process that converts data of arbitrary size to hash value. A hash is used to verify the data integrity of messages transmitted over a computer network. A hash is also called a hash value, hash code, digest, or digital fingerprint. An example of an additional mechanism for converting the imaged output, i.e. the captured the one or more displayed images, into at least one hash is referred to as salting" a hash function. The "salt" in such a mechanism comprises a unique feature, which may correspond, for example, to the image captured by the under-display camera in the presently described system or any other string, that is combined the captured image while creating the hash.

Stated differently, the unique pattern captured by the camera during 3003 when the at least one image is being output by the pixel layer can be converted into a hash, which is a type of digital fingerprint.

**The** camera and display settings may be set to preconfigured parameters during hash generation to maintain consistency. The preconfigured parameters may relate to camera imaging parameters and/or display output settings. Stated differently, example preconfigured parameters may relate to camera parameters, for example, fixing the camera to a fixed exposure, whiteness level, International Standards Organisation (ISO) light sensitivity, etc. Example preconfigured parameters of the display output settings may relate for example, to brightness level, any filter settings (such as blue light filters), etc.

There are some parameters that may affect the interference pattern that are outside of the control of the terminal. For example, temperature and pressure are both parameters that can control aspects of the display as variances in them can cause a terminal's shape and/or dimensions to change (e.g., to expand and/or contract). To address this, the terminal may be configured to generate (and associate) a respective hash for a plurality of different parameter values, and/or to perform a preconfigured action for minimising the effect of these parameters on the generated hash. These are illustrated in the following in respect of temperature. It is understood that an approximate indication of pressure may be provided by a geographical location of the terminal when the light interference pattern is being determined by the under-display camera.

In a first example, respective hash values are generated when the terminal is at a plurality of different temperatures.

In this first example, the under-display camera is configured to capture, for separate of a plurality of different temperatures, a respective interference pattern resulting from the output of at least one image. These respective interference patterns may be converted into a respective hash, and associated with the temperature at which that interference pattern was imaged. The respective hashes and their associated temperature may be provided to the requesting entity by the terminal. The associated hashes and their associated temperature may be used to create a mapping between hash variation and threshold limits for seeing that variation.

The temperature may be purposively varied by, for example, causing the intensity of the light output by the pixel layer to be increased over time. The terminal may comprise at least one thermos-dependent sensor that enables the terminal to determine that an increase and/or decrease in the temperature has occurred.

In the second example, the terminal is configured to turn off the display screen output prior to hash generation. The terminal may be configured to turn off the display screen until it is determined that the terminal and/or the display screen has reached a preconfigured temperature prior to hash generation. The terminal may be configured to turn off the display screen for a predetermined amount of time prior to hash generation.

It is also possible that during the hash generation process, the effects of both outer glass reflection (L-I4) and external ambient light (L-E1) are minimized.

For example, the above-mentioned hash could be primarily generated using L-11 to L-I3 light paths. This may assist in making the hash resilient to everyday usage. This can be achieved, for example, by ensuring that all light reaching the outer glass is absorbed during hash generation. This can be facilitated by minimising external light by placing a cover (e.g., a dark fabric, or user's hand) over the screen, i.e. masking the camera lens area, which helps to minimize interference from these factors.

**Similarly,** the effect of external light can be eliminated by capturing two images: one with the internal light switched on and the other with it off. The interference image may be determined by identifying a difference between these two captured images, or by combining these two images.

After the hash(es) have been generated by the terminal during 3004, the terminal causes these hash(es) to be stored at the requesting entity 301 during 3005. This may be provided to the requesting entity 301 such that each hash is provided with an indication of the at least one image (and/or an indication of which sequence of images was used to determine the associated hash). Where the generated hash is associated with at least one other external parameter (e.g., temperature), this association of the at least one other external parameter may also be provided to the requesting entity 301 during 3005.

**As** mentioned above, 3002 to 3005 may be performed periodically and/or aperiodically in order to determine whether at least one hash value stored at the requesting entity is to be updated. As it is believed that the interference pattern will be predominantly affected by reflections on the internal surfaces of the different display layers, these updates need not be frequent. The hash renewal may account for any potential changes, thereby improving the overall robustness of the system.

**The** hash could be used for various purposes, such as user authentication. This is illustrated from 3006 to 3014. Stated differently, the chosen video or image sequence becomes a type of password, where the terminal would re-display the at least one image on its display screen on the same terminal used to generate the hash in order to reproduce the corresponding hash for authentication purposes.

3006 to 3014 relate to a subsequent authentication and/or verification process performed between the terminal and the requesting entity 301 that uses the generated hash of 3004.

During 3006, the terminal 100 determines that authentication and/or secure communication is to be performed between the terminal 100 and at least one application and/or external service 301. The at least one application may be resident on the terminal. The at least one application and/or service may be external to the terminal. The at least one application may comprise the requesting entity 301, or have a trusted relationship with the requesting entity 301 such that the requesting entity 301 is trusted by the at least one application to verify the terminal.

During 3007, user input 302 causes the requesting entity 301 to be signalled. This signalling may request that the terminal be verified. This signalling may request that secure communication be established with the at least one application.

During 3008, the requesting entity 301 signals the terminal (illustrated here as signalling to user input 302). This signalling may comprise a request for a hash to be generated using the under-display camera for identifying the terminal.

During 3009, the terminal (represented herein as user input 302) causes the display to output, for example, to display, present or render, at least one image.

**The** at least one image of 3009 may correspond to the at least one image mentioned above in relation to 3002. Further, the positioning of the at least one image on the display of the terminal may be the same during 3009 as during 3002. Stated differently, the pixels are configured to, during 3009, output the same light (e.g., a same light frequency) in the same way (e.g., a same light intensity) as they did during 3002.

Where a plurality of hashes are generated during 3005, each hash being associated to a respective image and/or sequence of images, the at least one image of 3009 may correspond to a single one of the plurality of hashes.

**The** at least one image to be output during 3009 may be selected by the requesting entity 301. In this case, an identification of the at least one image may be signalled during 3008. Further, an identification of a predetermined order (e.g., sequence) of the at least one image to be used for hash generation may be signalled during 3008 when the hash to be used for verification is associated with the predetermined order. Analogous signalling may be used when different regions of a single image are used for generating a single hash (as described above in relation to 3004). Further, when this information has been provided to the requesting entity 301 during 3005, the requesting entity 301 may signal a value of an external parameter (e.g., a temperature value) associated with the hash to be generated.

**The** at least one image to be output during 3009 may be selected by the terminal. The at least one image to be output during 3009 may be selected by a user input 302 into the terminal.

During 3010, the under-display camera is caused to image the output of 3009, i.e. to capture the one or more displayed images, and the terminal comprising the under-display camera is caused to detect interference in the imaged output, i.e. the captured the one or more displayed images, that results from light leakage from the pixel layer.

During 3011, the under-display camera 304 generates the hash based on the display output during 3009 and the detected interference 3010. This may be as described above in relation to 3004.

During 3012, the under-display camera 304 causes the hash to be provided to the requesting entity 301.

When the requesting entity selects the at least one image to be displayed (as described above in relation to 3009), the signalling of 3012 may comprise the hash without information identifying the at least one image and/or external parameter values.

When the terminal and/or the user input selects the at least one image to be displayed (as described above in relation to 3009), the signalling of 3012 may comprise an identification of the at least one image used for generating the signalled hash. Further, the signalling of 3012 may comprise an identification of the predetermined order (e.g., sequence) of the at least one image used for hash generation, and/or an identification of which regions of a single image has been used for hash generation (as described above in relation to 3004). Further, when this information has been provided to the requesting entity 301 during 3005, the signalling of 3012 may comprise a value of an external parameter (e.g., a temperature value) associated with the hash to be generated.

During 3013, the requesting entity 301 compares the hash received during 3012 with at least one hash stored at the requesting entity during 3005.

When the requesting entity determines that the hash received during 3012 matches at least one hash stored at the requesting entity during 3005, the requesting entity 301 authorises the terminal for the at least one application during 3014.

**When** the requesting entity determines that the hash received during 3012 does not match at least one hash stored at the requesting entity during 3005, the requesting entity 301 does not authorise the terminal and/or user for the at least one application during 3014, and the at least one application is caused to refuse to proceed with providing a service for the terminal.

For example, the requesting entity may compare the first hash (of 3005) and the second hash (of 3012) to determine whether they "substantially" match. This may comprise, for example, calculating a distance between the first hash and second hash. The first and second hash may be considered to substantially match when the calculated distance is less than or equal to a predetermined distance threshold value (e.g., an error threshold).

When the determined or estimated distance is greater than the predetermined threshold, then the requesting entity may determine that first and second hashes do not substantially match. In such a case, the requesting entity determines that the user cannot be authenticated and/or verified and may consequently provide the service provider with an indication that the user and/or user device has not been authenticated and/or verified.

When the determined or estimated distance is less than or equal to a predetermined distance threshold or error threshold, then the first and second hashes may be considered to substantially match. Stated differently, the first and second hashes may be considered to match each other when the distance between the first and second hashes (e.g., hamming distance, Euclidean distance, similarity, etc.) is below a predetermined distance threshold or an error threshold. The distance between the first and second hashes may be calculated on a distance metric applicable to the hashing algorithm used to generate the first and second hashes.

When the first and second hashes are identical, then the distance is 0 and considered an exact match.

**The** distance between two hashes may be calculated based on a distance metric associated with the type of hashing algorithm used by the service provider and/or user device. The predetermined distance threshold and/or type of distance metric used for the comparison may also be communicated via a digital code from the service provider and/or requesting entity, for example, in the step 3001b. Alternatively, the distance metric and/or the distance threshold may be set by a user input of the user device, for example, in the step 3001a, depending on the level of trustworthiness the user is prepared to accept.

FIG. 5 illustrates features of the above examples. It is therefore understood that the above examples may provide examples of how the following described mechanisms may be implemented in various situations. Further, it is understood that features mentioned below may find a functional correspondence with the examples mentioned above.

FIG. 5 illustrates operations that may be performed by an apparatus comprising a display layer and an under-display camera. These operations may be performed as part of an initial generation of a hash. These operations may be performed as part of a re-generation of a previously generated hash. The apparatus may be comprised in or by a terminal.

During 501, the apparatus causes at least one image to be output, for example, to be displayed, presented or rendered, by the display layer. For example, the apparatus may cause the at least one image to be output by a pixel layer comprised (e.g., located) in the display layer. In such an example, the pixel layer may be considered to comprise at least one layer of the display layer that comprises at least one pixel immediately above the under-display camera. The pixel layer may comprise at least one layer of the display layer that comprises a plurality of pixels immediately above the under-display camera. The pixel layer may comprise an array of pixels that are immediately above the under-display camera. The pixel layer may comprise a pixel definition layer. The pixels comprised in the pixel layer may comprise organic light emitting diodes.

It is understood that in the present context, the phrase "immediately above" relates to the positioning of the at least one pixel or plurality of pixels or array of pixels such that light external to the display layer reaches the lens of the under-display camera between gaps of said pixel(s). Stated differently, the under-display camera is configured to image a scene external to the display layer using the camera's lens and light that passes between two immediately adjacent pixels comprised in the pixel layer.

During 502, the apparatus uses the under-display camera to determine an interference pattern resulting from the at least one image being output. The interference pattern may comprise a light-based interference pattern. The interference pattern may comprise an interference pattern that is camera-specific and/or display layer-specific (e.g., more generally, that is apparatus-specific). The interference pattern may be unique to the apparatus. The uniqueness may be based on variations in manufacturing of at least one layer of the display layer and/or camera lens between different apparatuses.

During 503, the apparatus converts the determined pattern into a first hash. The first hash may be unique, as described above. The first hash may be a hash as described above.

During 504, the apparatus signals the first hash to a requesting entity for verifying the apparatus.

**The** requesting entity may comprise an application remote from the apparatus. The requesting entity may comprise an application local to the apparatus. The requesting entity may comprise a third party apparatus trusted to verify the apparatus by an application configured to provide a service to the apparatus.

**The** requesting entity may provide an indication of the at least one image to the apparatus prior to the image being output.

For example, the causing the at least one image to be output, for example, to be displayed, presented or rendered may comprise receiving, from the requesting entity, an indication of the at least one image, and using the indication to identify the at least one image to be output from a plurality of images.

When the at least one image comprises more than one image, the causing the at least one image to be output may comprise receiving, from the requesting entity, an indication of an order in which the more than one image are to be output, and causing the more than one image to be output in the indicated order. The order may be as described above in the examples. For example, the order of images may correspond to an ordering (e.g., a sequence) of images.

The using the under-display camera to determine the interference pattern resulting from the at least one image being output, for example, being displayed, presented or rendered, may further comprise causing, the under-display camera to photograph or capture at least a portion of a plurality of the more than one image, and determining the interference pattern using said photographs or captured images. Stated differently, the using the under-display camera may comprise using a rolling shutter effect to determine the interference pattern.

When the at least one image comprises a single image, the causing the at least one image to be output may comprise receiving, from the requesting entity, an indication of an order of a plurality of different regions of the single image in which the single image is to be output, and causing the different regions of the single image to be output in the indicated order. The order may be as described above in the examples. For example, the order of regions may correspond to an ordering (e.g., a sequence) of regions of an image.

The at least one image may be selected locally at the apparatus.

For example, the causing the at least one image to be output may further comprise selecting, by the apparatus either autonomously or via user input, the at least one image, and signalling an indication of the at least one image to the requesting entity.

When the at least one image comprises more than one image, the causing the at least one image to be output may further comprise selecting, by the apparatus either autonomously or via user input, an order in which the more than one image are to be output, and causing the more than one image to be output in the indicated order. The apparatus may further signal an indication of the order to the requesting entity. The order may be as described above in the examples. For example, the order of images may correspond to an ordering (e.g., a sequence) of images.

The using the under- display camera to determine the interference pattern resulting from the at least one image being output may further comprise causing, the under-display camera to photograph or capture at least a portion of a plurality of the more than one images, and determining the light-based interference pattern using said photographs or captured images.

When the at least one image comprises a single image, the means for causing the at least one image to be output may further comprise: selecting, by the apparatus either autonomously or via user input, an order of a plurality of different regions of the single image in which the single image is to be output, and causing the different regions of the single image to be output in the indicated order. The apparatus may further be caused to signal an indication of the order to the requesting entity. The order may be as described above in the examples. For example, the order of regions may correspond to an ordering (e.g., a sequence) of regions of an image.

**The** apparatus may, for an image of the at least one image output, determine a respective temperature of the display screen while the image is being output, and signal, to the requesting entity, an indication of a mapping that maps the respective temperatures to their respective image of the at least one image.

**The** operations of 501 to 505 may be performed as part of a registration procedure for registering and/or re-registering, with a service provider, at least one of a user of the apparatus, the apparatus, or the user of the apparatus and the apparatus.

Subsequent to said signalling the first hash to the requesting entity for verifying the apparatus, the user, or the user of the apparatus and the apparatus, the apparatus may request to receive a service from the service provider. The apparatus may receive, from the requesting entity, a request for a hash for verifying the apparatus. The apparatus may determine to regenerate the first hash using the at least one image. This determination to regenerate the first hash may be based on the receipt of the request for the hash. The request may identify the at least one image and/or at least one order of the at least one image and/or at least one order of a plurality of regions of an image. The apparatus may, subsequent to determining to regenerate the first hash, causing the at least one image to be re-output by the display layer. The apparatus may use the under-display camera to determine the light-based interference pattern resulting from the at least one image being re-output. The apparatus may convert the determined pattern into a second hash. The apparatus may signal the second hash to the requesting entity for verifying the apparatus to the service provider.

The requesting entity may complete a verification procedure using the signalled first and second hashes.

**The** comparison operation described above with respect to the requesting entity may, in some examples, be performed by the apparatus. This may be useful, for example, when the requesting entity is comprised in an application that is resident on the apparatus. It is understood that in other example implementations, the requesting entity may be located external to the apparatus and/or user device.

For example, the apparatus may be caused to compare the first hash to the second hash, wherein the comparing the first hash and the second hash further comprises: calculating a distance between the first and the second hashes; and determining the first hash and second hash are at least substantially matching when the distance is less than or equal to a predetermined distance threshold or error threshold. The distance may comprise one or more from the group of: a hamming distance between the first and second hash; a Euclidean distance between the first and second hash; or any other distance metric between the first and the second hash used by a hashing algorithm that generates the first and the second hash .

The first hash and the second hash may be generated using a hashing algorithm based on one or more hashing algorithms from the group of: an Average Hashing, aHash, algorithm; a Median Hashing, mHash, algorithm; a Perceptual Hashing, pHash, algorithm; a Difference Hashing, dHash, algorithm; a Block Hashing, bHash, algorithm; a Wavelet Hashing, wHash, algorithm; a ColorMoment Hashing algorithm; a Color Hashing, Colorhas, algorithm, a Marr-Hildreth, marrhildreth, hashing algorithm; a fuzzy hashing algorithm; a video hashing algorithm; a locality-sensitive hashing algorithm; a machine learning hashing algorithm; a pair of machine learning hashing models; or any other hashing algorithm configured for generating a hash from one or more images. The hashing algorithm used for generating the first hash and the second hash may be the same hashing algorithm; or the hashing algorithm used for generating the first hash and the second hash may be similar or different hashing algorithms that generate the same hash.

In all of the above examples, the at least one image may comprise video data.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is also noted herein that while the above describes example embodiments, there are several variations and modifications which may be made to the disclosed solution without departing from the scope of the present invention.

**As** used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof 102. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

**As** used in this application, the term "circuitry" may refer to one or more or all of the following:
(a) hardware-only circuit implementations (such as implementations in only analog and/or digital circuitry) and
(b) combinations of hardware circuits and software, such as (as applicable):
(c) a combination of analog and/or digital hardware circuit(s) with software/firmware and
(d) any portions of hardware processor(s) with software (comprising digital signal processor(s)), software, and memory(ies) that work together to cause an apparatus, such as a mobile phone or server, to perform various functions) and
(e) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, comprising software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

**The** scope of protection sought for various embodiments of the disclosure is set out by the independent claims. The embodiments and features, if any, described in this specification that do not fall under the scope of the independent claims are to be interpreted as examples useful for understanding various embodiments of the disclosure.

**The** foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus comprising a display layer and an under-display camera, the apparatus comprising:
means for causing at least one image to be output by the display layer;
means for using the under-display camera to determine an interference pattern resulting from the at least one image being output;
means for converting the determined pattern into a first hash; and
means for signalling the first hash to a requesting entity for verifying the apparatus.

2. An apparatus as claimed in claim 1, wherein the means for causing the at least one image to be output further comprises:
means for receiving, from the requesting entity, an indication of the at least one image; and
means for using the indication to identify the at least one image to be output from a plurality of images.

3. An apparatus as claimed in any preceding claim, wherein the at least one image comprises more than one image, and the means for causing the at least one image to be output further comprises:
means for receiving, from the requesting entity, an indication of an order in which the more than one image are to be output; and
means for causing the more than one image to be output in the indicated order.

4. An apparatus as claimed in claim 3, wherein the means for using the under-display camera to determine the interference pattern resulting from the at least one image being output further comprises:
means for causing, the under-display camera to capture at least a portion of a plurality of the more than one image; and
means for determining the interference pattern using said captured images.

5. An apparatus as claimed in any of claims 1 to 2, wherein the at least one image comprises a single image, and the means for causing the at least one image to be output further comprises:
means for receiving, from the requesting entity, an indication of an order of a plurality of different regions of the single image in which the single image is to be output; and
means for causing the different regions of the single image to be output in the indicated order.

6. An apparatus as claimed in claim 1, wherein the means for causing the at least one image to be output further comprises:
means for selecting, by the apparatus either autonomously or via user input, the at least one image; and
means for signalling an indication of the at least one image to the requesting entity.

7. An apparatus as claimed claim 6, wherein the at least one image comprises more than one image, and the means for causing the at least one image to be output further comprises:
means for selecting, by the apparatus either autonomously or via user input, an order in which the more than one image are to be output;
means for causing the more than one image to be output in the indicated order; and
the apparatus further comprises means for signalling an indication of the order to the requesting entity.

8. An apparatus as claimed in claim 7, wherein the means for using the under-display camera to determine the interference pattern resulting from the at least one image being output further comprises:
means for causing, the under-display camera to capture at least a portion of a plurality of the more than one image; and
means for determining the light-based interference pattern using said captured images.

9. An apparatus as claimed in claim 6, wherein the at least one image comprises a single image, and the means for causing the at least one image to be output further comprises:
means for selecting, by the terminal either autonomously or via user input, an order of a plurality of different regions of the single image in which the single image is to be output;
means for causing the different regions of the single image to be output in the indicated order; and
the apparatus further comprises means for signalling an indication of the order to the requesting entity.

10. An apparatus as claimed in any preceding claim, wherein the steps of claim 1 are performed as part of a registration procedure for registering or re-registering a user of the apparatus, the apparatus, or the user of the apparatus and the apparatus with a service provider.

11. An apparatus as claimed in claim 10, further comprising subsequent to said signalling the first hash to the requesting entity for verifying the apparatus, the user, or the user of the apparatus and the apparatus:
means for requesting to receive a service from the service provider;
means for receiving, from the requesting entity, a request for a hash for verifying the apparatus;
means for causing the at least one image to be re-output;
means for using the under-display camera to determine a light-based interference pattern resulting from the at least one image being re-output;
means for converting the determined pattern into a second hash; and
means for signalling the second hash to the requesting entity for verifying the apparatus to the service provider.

12. An apparatus as claimed in claim 11, further comprising:
means for comparing the first hash to the second hash, wherein the means for comparing the first hash and the second hash,
wherein the first hash and the second hash are generated using a hashing algorithm based on one or more hashing algorithms, further comprises:
means for calculating a distance between the first hash and the second hash; and
means for determining the first hash and second hash are at least substantially matching when the distance is less than or equal to a predetermined distance threshold or error threshold.

13. An apparatus as claimed in claim 12, wherein:
the hashing algorithm used for generating the first hash and the second hash is the same hashing algorithm; or
the hashing algorithm used for generating the first hash and the second hash are similar or different hashing algorithms that generate the same hash.

14. A method for an apparatus comprising a display layer and an under-display camera, the method comprising:
causing at least one image to be output by the display layer;
using the under-display camera to determine an interference pattern resulting from the at least one image being output;
converting the determined pattern into a first hash; and
signalling the first hash to a requesting entity for verifying the apparatus.

15. A computer program comprising instructions which, when the program is executed by a computer of an apparatus comprising a display layer and an under-display camera, cause the computer to carry out:
causing at least one image to be output by the display layer;
using the under-display camera to determine an interference pattern resulting from the at least one image being output;
converting the determined pattern into a first hash; and
signalling the first hash to a requesting entity for verifying the apparatus.
